# EUROPEAN PATENT SPECIFICATION

(11) **EP 4 329 027 B1**
(45) Date of publication and mention of the grant of the patent: **28.10.2026**
(21) Application number: 22870280.9
(22) Date of filing: 14.09.2022
(51) Int. Cl.: H01M 10/04, H01M 10/0583, H01M 10/0585, H01M 4/04

(54) **ELECTRODE ASSEMBLY, SECONDARY BATTERY COMPRISING SAME, AND SECONDARY BATTERY MANUFACTURING METHOD FOR MANUFACTURING SAME**
ELEKTRODENANORDNUNG, DIESE UMFASSENDE SEKUNDÄRBATTERIE, UND SEKUNDÄRBATTERIEHERSTELLUNGSVERFAHREN ZUR DESSEN HERSTELLUNG
ENSEMBLE ÉLECTRODE, BATTERIE SECONDAIRE LE COMPRENANT, ET PROCÉDÉ DE FABRICATION DE BATTERIE SECONDAIRE POUR SA FABRICATION.

(30) Priority: 14.09.2021 KR 20210122787; 13.09.2022 KR 20220115146
(43) Date of publication of application: 28.02.2024
(73) Proprietor: LG ENERGY SOLUTION, LTD., Seoul 07335 (KR)
(72) Inventor: SONG, Eui Seob, Daejeon 34122 (KR); PARK, Ki Beom, Daejeon 34122 (KR); LI, Zheng Hua, Daejeon 34122 (KR); LEE, Hyo Joon, Daejeon 34122 (KR); YEE, Min Ha, Daejeon 34122 (KR); SONG, Eun Ji, Daejeon 34122 (KR)
(74) Representative: Plasseraud IP
(86) International application number: PCT/KR2022/013735
(87) International publication number: WO 2023/043196

(56) References cited:
- WO-A1-2020/159306
- WO-A1-2020/226320
- DE-A1- 102014 207 531
- KR-A- 20180 006 324
- KR-A- 20190 091 094
- KR-A- 20200 095 896
- KR-A- 20200 127 759
- KR-A- 20210 106 254

## Description

### TECHNICAL FIELD

### CROSS-REFERENCE TO RELATED APPLICATION

The present application claims the benefit of the priority of Korean Patent Application Nos. 10-2021-0122787, filed on September 14, 2021, and 10-2022-0115146, filed on September 13, 2022.

### TECHNICAL FIELD

The present invention relates to an electrode assembly, a secondary battery including the same, and a a method for manufacturing a secondary battery, which manufactures the same, and more particularly, to an electrode assembly, which is capable of improving a non-bonded area of an electrode and a separator inside an electrode unit and a non-bonded area of an electrode unit and a separator sheet inside the electrode assembly, a secondary battery including the same, and a method for manufacturing a secondary battery, which manufactures the same.

### BACKGROUND ART

Batteries (cells) that generate electric energy through physical or chemical reaction to supply the generated electric energy to the outside are used when AC power to be supplied to the building is not obtained, or DC power is required according to the living environments surrounded by various electric and electronic devices.

Among such batteries, primary batteries and secondary batteries, which are chemical batteries using chemical reaction, are being generally used. The primary batteries are consumable batteries which are collectively referred to as dry batteries. In addition, secondary batteries are rechargeable batteries that are manufactured by using a material in a redox process between current and a substance is repeatable several times. When the reduction reaction is performed on the material by the current, power is charged, and when the oxidation reaction is performed on the material, power is discharged. Such the charging-discharging is repeatedly performed to generate electricity.

Here, in a lithium ion battery among secondary batteries, an electrode slurry, in which an active material, a conductive material, and a binder are mixed, may be applied at a predetermined thickness to a positive electrode conductive foil and a negative electrode conductive foil to manufacture an electrode, and a separator may be interposed between both the conductive foils to manufacture an electrode assembly.

In addition, the secondary battery may be classified according to a structure of the electrode assembly having a structure of a positive electrode/separator/negative electrode. For example, the secondary batteries may be classified into a cylindrical secondary battery, in which long sheet-type positive and negative electrodes are wound several times in the form of a bulk jelly roll with a separator therebetween to manufacture an electrode assembly, and then, the manufactured electrode assembly is accommodated in a cylindrical can so that the can is sealed, and a pouch-type secondary battery, in which a bi-cell, in which positive and negative electrodes, each of which has a predetermined size, are stacked with a separator therebetween, is folded to manufacture an electrode assembly, and then, the manufactured electrode assembly is accommodated in a pouch so that the pouch is sealed.

When manufacturing the electrode, the electrode slurry is non-uniformly applied to the conductive foils due to viscosity of the electrode slurry, resulting in a difference in coating thickness of the electrode slurry. Particularly, in the pouch-type secondary battery, the difference in coating thickness of the electrode slurry forms a non-bonded area of the electrodes and separator inside a unit cell manufactured by including the electrodes after the electrodes are manufactured and a non-bonded area of a unit cell and a separator sheet of the electrode assembly including the unit cell, resulting in lithium precipitation due to interfacial resistance on the negative electrode to increase in resistance of the electrodes.

Document WO2020/159306 A1 describes a battery cell assembly where battery cells are stacked and separated by a zigzag separation sheet. Document WO2020/226320 A1 describes a folded battery cell where the length difference of an anode layer and a cathode layer in the fold area is compensated.

### DISCLOSURE OF THE INVENTION

### TECHNICAL PROBLEM

The present invention has been made to solve the above problems, and an object of the present invention is to provide an electrode assembly, which is capable of improving a non-bonded area of an electrode and a separator inside an electrode unit and a non-bonded area of an electrode unit and a separator sheet inside the electrode assembly, a secondary battery including the same, and a method for manufacturing a secondary battery, which manufactures the same.

### TECHNICAL SOLUTION

The present invention provides a method for manufacturing a secondary battery, as defined in claim 1.

In the correction process, the height difference may be corrected so that the outer surface of the electrode assembly has a uniform height.

In the correction process, the correction sheet may be disposed at an upper side of the separator sheet on the second area by as much as a difference between the first height and the second height.

The second area may be disposed to correspond to an edge of the electrode assembly.

The electrode assembly may include an electrode tab connected to the electrode, and the second area may be disposed to correspond to an area on which the electrode tab of the electrode assembly is disposed.

The correction sheet may be made of an insulating material.

The correction sheet may include a synthetic resin or an adhesive material.

The correction sheet may include a cast polypropylene tape (CPP).

In addition, the present invention may provide an electrode assembly as defined in claim 9.

The correction sheet is disposed at an upper side of the separator sheet on the second area (12) by as much as the height difference between the first area and the second area.

The second area may be disposed to correspond to an edge of the electrode assembly.

The electrode assembly may include an electrode tab connected to the electrode, and the second area may be disposed to correspond to an area on which the electrode tab of the electrode assembly is disposed.

In addition, the present invention may provide a secondary battery including an electrode assembly as defined above.

### ADVANTAGEOUS EFFECTS

The present invention may have the advantage of including the correction process of correcting the height difference occurring on the outer surface of the electrode assembly so that the non-bonded area of the electrode and the separator inside the unit cell and the non-bonded area of the unit cell and the separator sheet inside the electrode assembly are pressed in the pressing process to bond the non-bonded areas to each other, thereby improving the performance of the secondary battery.

In addition, the present invention may have the advantage in that the at least one pressing surface of the pressing press, which presses the electrode assembly, is formed to be stepped so that the non-bonded area of the electrode and the separator inside the unit cell and the non-bonded area of the unit cell and the separator sheet inside the electrode assembly are pressed to bond the non-boned areas to each other, thereby improving the performance of the secondary battery.

### BRIEF DESCRIPTION OF THE DRAWINGS

FIG. 1 is a flowchart illustrating a method for manufacturing a secondary battery according to the present invention.
FIG. 2 is a side view illustrating a side surface of an electrode assembly in which a height difference is corrected according to the present invention.
FIG. 3 is a front view illustrating a front surface of the electrode assembly in which the height difference is corrected according to the present invention.
FIG. 4 is a conceptual view illustrating a process of pressing the electrode assembly using a pressing press of an apparatus for manufacturing the secondary battery according to the present invention.
FIG. 5 is an enlarged view illustrating a portion A of a pressing surface of the pressing press.
FIG. 6 is a flowchart illustrating a pressing process in the method for manufacturing the secondary battery according to the present invention.
FIG. 7 is a conceptual view illustrating a process of pressing the electrode assembly using a first pressing press and a second pressing press in the method for manufacturing the secondary battery according to the present invention.
(a) and (b) of FIG. 8 are images illustrating whether a non-bonded area of an electrode and a separator is formed on a unit cell (bi-cell) manufactured according to the related art and the present invention, respectively.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

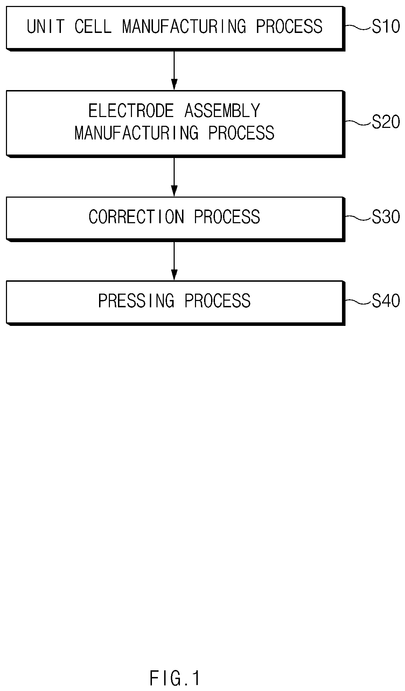

As illustrated in FIG. 1, the present invention provides a method for manufacturing a secondary battery, which includes: a unit cell manufacturing process (S10) of manufacturing a unit cell including an electrode and a separator; an electrode assembly manufacturing process (S20) of folding a plurality of unit cells and separator sheets to be alternately stacked so as to manufacture an electrode assembly; a correction process (S30) of correcting a height difference occurring on an outer surface of the electrode assembly; and a pressing process (S40) of pressing the electrode assembly.

First, the unit cell manufacturing process (S10) may be a process of manufacturing the unit cell including the electrode and the separator and be performed in various manners.

For example, in the unit cell manufacturing process (S10), electrode slurry may be applied on an electrode collector (e.g., conductive foil) to be applied on the electrode collector, thereby manufacturing a positive electrode or a negative electrode. Then, the separator may be interposed between the positive electrode and the negative electrode, and the positive electrode and the negative electrode and the separator may be pressed to manufacture the unit cell.

However, in the process of manufacturing the electrodes, the electrode slurry may be applied on only a partial area on the electrode collector, and thus, a difference in thickness between an area, on which the electrode slurry is uniformly applied, and the applied electrode slurry may occur on the partial area on which the electrode slurry is non-uniformly applied. Particularly, when a smaller amount of electrode slurry is applied to the area, on which the electrode slurry is non-uniformly applied, rather than the surrounding uniformly applied area, an empty space may be formed between the electrode and the separator, resulting in the non-bonded area.

After the unit cell manufacturing process (S10), as illustrated in FIG. 1, the electrode assembly manufacturing process (S20) of manufacturing the electrode assembly 10 including the unit cell may be performed.

Here, the electrode assembly manufacturing process (S20) may be a process of manufacturing the electrode assembly by folding the plurality of unit cells and separator sheets so as to be alternately stacked and may be performed in various manners.

Specifically, in the electrode assembly manufacturing process (S20), the unit cells manufactured in the above-described unit cell manufacturing process (S10) may be disposed side by side on the separator sheet, the unit cells and the separator sheets, which are formed with one surfaces having surface areas and shapes corresponding to each other, may be disposed to be alternately stacked, and the separator sheets may be folded several times in a direction in which the separator sheets surround the unit cell disposed on the separator sheets to manufacture the electrode assembly 10. An outer surface of the electrode assembly 10 manufactured as described above may be formed in a shape in which the separator sheet surrounds the electrode assembly 10. That is, since the unit cell and the separator sheet are formed to have the surface areas and shape corresponding to each other, the outer surface of the manufactured electrode assembly 10 may not expose the electrode portion of the unit cell and may be completely wrapped with the separator sheet to protect the unit cell disposed inside the separator sheet.

However, the electrode slurry may be non-uniformly applied on the partial area between the electrode and the separator. In this case, the difference in coating thickness of the electrode slurry may occur between the uniformly applied surrounding area and the non-uniformly applied area, resulting in the non-bonded area between the electrode and the separator. In the case of the unit cell having the non-bonded area, a specific area of the unit cell may have a relatively low height compared to each of other areas by the difference in coating thickness of the electrode slurry. Thus, when the electrode assembly 10 is manufactured, if the unit cells are disposed to be stacked in parallel in one direction, a non-bonded area may be formed again between the unit cell and the separator sheet by the non-bonded area formed in the unit cell. Then, when the separator sheet is folded several times, the non-bonded areas may be accumulated, and thus, a specific area of the electrode assembly 10 may have a relatively low height compared to each of other areas.

Specifically, the electrode assembly 10 may have a height difference formed on the outer surface so that the outer surface is formed to be stepped in a stair shape, or the outer surface is formed to be inclined with a predetermined inclination.

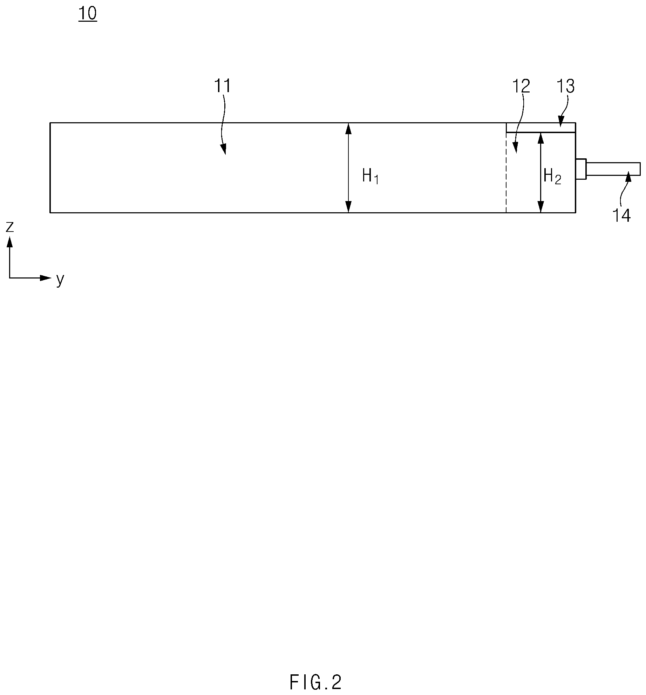

In this case, as illustrated in FIG. 2, the electrode assembly 10 may include a first area 11 having a first height H1; and a second area 12 having a second height H2 lower than the first height H1. However, dotted lines disposed between the first area 11 and the second area 12 in FIG. 2 are shown to understand positions of the first area 11 and the second area 12, and thus, it does not mean that an internal area of the electrode assembly 10 is divided.

Specifically, the first area 11 means an area having the first height H1 in the electrode assembly 10.

Here, the first height H1 may be defined as a height formed with the highest height from one surface of the electrode assembly 10 disposed in the stacking direction of the unit cells to the other surface facing the one surface. Thus, the first area 11 may be understood as an area having the thickest thickness in the electrode assembly 10.

The second area 12 means an area having the second height H2 lower than the first height H1 in the electrode assembly 10. A height difference between the second height H2 and the first height H1 may be formed to be accumulated while the non-bonded area between the electrode and the separator, which occurs by the difference in coating thickness of the electrode slurry applied to the electrode in the unit cell, and the non-bonded area formed by alternately stacking the unit cell and the separator sheet are folded several times.

Here, the second height H2 may be defined as a height formed so that a height from one surface of the electrode assembly 10 disposed in the stacking direction of the unit cells to the other surface facing the one surface is lower than the first height H1. Thus, the second area 12 may be understood as all areas having a thickness less than that of the first area 11 in the electrode assembly 10.

Also, the second area 12 may be disposed at any portion on the electrode assembly 10.

For example, as a length of the electrode collector increases, the electrode slurry may be less likely to reach an edge of the electrode collector when the electrode slurry is applied, and thus, the second area 12 may be disposed to correspond to an edge of the electrode assembly 10.

Particularly, the second area 12 may be disposed to correspond to the edge area of the electrode assembly 10 on which the electrode tab 14 is disposed on the edge area of the electrode assembly 10.

In the case of manufacturing two electrodes by applying and drying the electrode slurry to a central portion of one electrode collector to cut the electrode collector during the electrode manufacturing, it may be expected that the electrode slurry is sufficiently applied to an edge area of the electrode assembly 10, which originally corresponds to the central portion of the electrode current collector, but it may be understood that the edge area of the electrode assembly 10, on which the electrode tab 14 is disposed, is easy to allow the electrode slurry to be relatively less reached. That is, while the electrode slurry less reaches the edge area, the coating thickness of the electrode slurry may become thinner, and the second area 12 may be formed.

Here, the electrode tab 14 may be formed on the electrode collector through a notching process before the electrode slurry is applied or may be attached to any portion of the electrode collector after the electrode slurry is applied so as to be connected to the electrode.

The correction process (S30) of correcting the height difference formed on the outer surface of the electrode assembly 10 so that the outer surface of the electrode assembly 10 is uniformly pressed in the pressing process (S40) to be described later after the electrode assembly manufacturing process (S20) may be additionally performed.

That is, as the height difference of the outer surface of the electrode assembly 10 is corrected through the correction process (S30), not only the first area 11 having a relatively high height, but also the second area 12 having a relatively low height in the electrode assembly 10 may be pressed in the pressing process (S40) described below, and thus, the non-bonded area of the electrode and the separator, which is disposed on the second area 12, and the non-bonded area of the unit cell and the separator sheet may be improved.

Specifically, the correcting process (S30) may be a process of correcting the height difference formed on the outer surface of the electrode assembly 10 by disposing a correction sheet 13 on an area of the electrode assembly 10, which is formed with a relatively low height and may be performed in various manners.

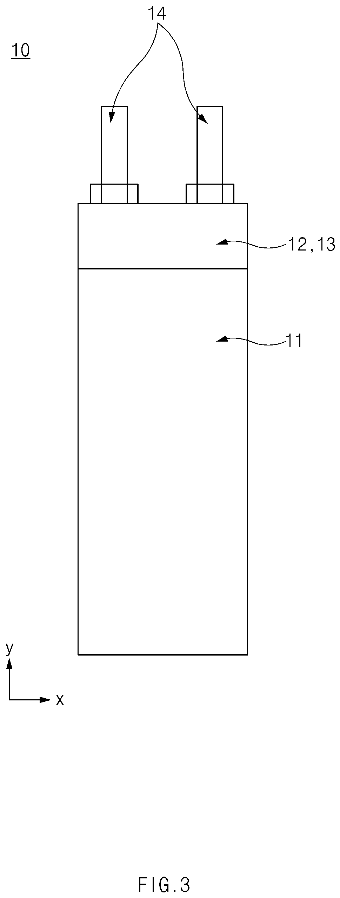

For example, in the correction process (S30), as illustrated in FIGS. 2 and 3, the correction sheet 13 may be disposed at an upper side of the separator sheet on the second area 12 having the relatively low height in the electrode assembly 10 to correct the height difference H1-H2 between the first area 11 and the second area 12. The electrode assembly 10 may be provided to have areas and shapes corresponding to each other to manufacture the electrode assembly 10, and since the outer surface of the manufactured electrode assembly 10 is wrapped by the separator sheet, the correction sheet 13 may be provided and attached at the upper side of the separator sheet on the second area 12. In FIG. 3, reference numerals 12 and 13 are shown to indicate the same position, but since the correction sheet 13 is additionally disposed on the second area 12, it is noted that, in the present invention, the second area 12 and the correction sheet 13 are distinct concepts. In addition, a solid line disposed between the first area 11 and the second area 12 in FIG. 3 is shown to distinguish the correction sheet 13 additionally disposed on the first area 11 and the second area 12 and does not mean that the internal area of the electrode assembly 10 is divided.

Here, the correction sheet 13 may be stacked in various numbers so as to reduce the height difference H1-H2 between the first area 11 and the second area 12.

For example, at least one correction sheet 13 may be stacked and disposed according to the thickness of the correction sheet 13 and the height difference H1-H2 between the first area 11 and the second area 12.

Here, the correction sheet 13 may be disposed at the upper side of the separator sheet on the second area 12 by as much as the height difference H1-H2 between the first height H1 and the second height H2 so that the height of the outer surface of the electrode assembly 10 is uniform.

The correction sheet 13 may be made of various materials. For example, the correction sheet 13 may be made of any material as long as it does not affect the performance of the electrode assembly and may include, for example, a synthetic resin or an adhesive material.

In addition, a tape made of an insulating material may be used for the correction sheet 13, and for example, a CPP tape (cast polypropylene tape) used for insulating an electrode tab in the related art may be used.

In addition, the correction sheet 13 may have various widths and thicknesses, and for example, the correction sheet 13 may have a width of 12 mm and a thickness of 0.03 t.

After the correction process (S30) is performed, the pressing process (S40) of pressing the electrode assembly 10 to bond the unit cell and the separator sheet of the electrode assembly 10 to each other is performed.

Here, the pressing process (S40) may be a process of pressing the electrode assembly 10 and may be performed in various manners.

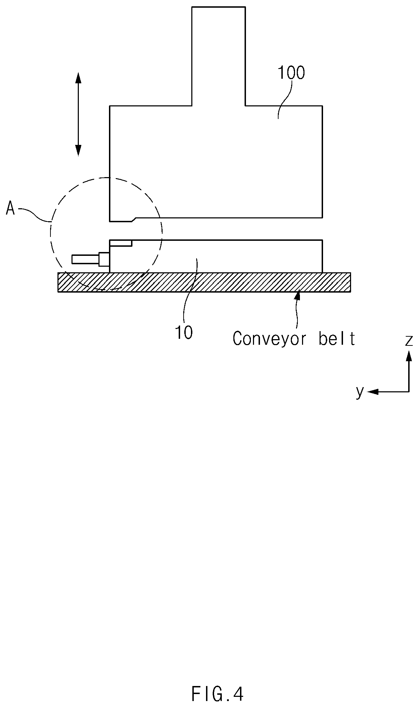

For example, as illustrated in FIG. 4, the pressing process (S40) may be performed using an apparatus for manufacturing the secondary battery, which includes a pressing press 100 for pressing the electrode assembly 10 moving on a conveyor belt. Here, the electrode assembly 10 may move on the conveyor belt in an x direction (a direction penetrating the drawing) perpendicular to a y-z plane of the drawing.

Here, the pressing press 100 may be a configuration that presses the electrode assembly 10 and may have various configurations.

For example, as described above, the pressing press 100 may have a pressing surface 110 formed to be stepped so as to correspond to the height difference formed on the outer surface of the electrode assembly 10 so that the pressing press 100 press the outer surface of the electrode assembly 10 as uniformly as possible even when the height difference is formed on the outer surface of the electrode assembly 10.

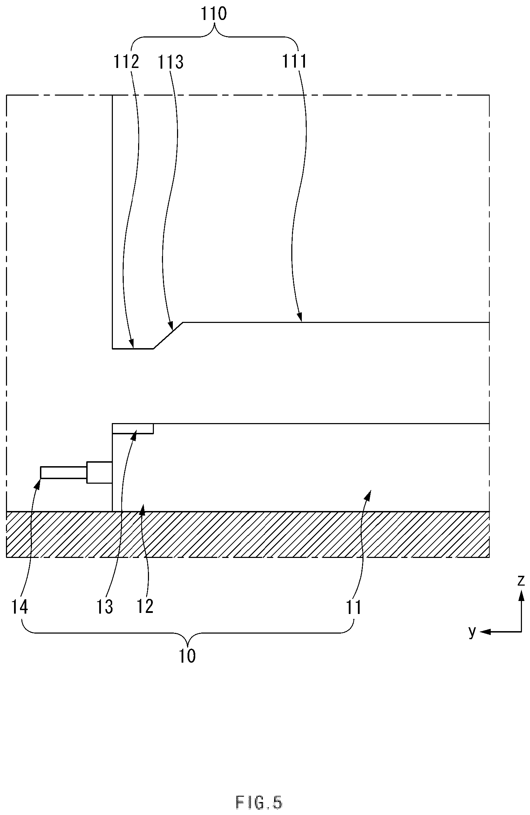

Particularly, as illustrated in FIG. 5, the pressing surface 110 includes: a first pressing surface 111 formed on a lower portion of the pressing press 100 to press the first area 11; a second pressing surface 112 pressing the second area 12; and a connection surface 113 connecting the first pressing surface 111 to the second pressing surface 112.

The first pressing surface 111 may be a pressing surface that presses the first area 11 and may have various configurations. For example, the first pressing surface 111 may have any shape as long as the first pressing surface 111 is capable of pressing the first area 11.

The second pressing surface 112 may be a pressing surface that presses the second area 12 and may have various configurations. For example, the second pressing surface 112 may have any shape as long as it can press the second area 12.

Here, the second pressing surface 112 may be formed to protrude more than the first pressing surface 111 toward the electrode assembly 10.

That is, the first pressing surface 111 and the second pressing surface 112 may be formed to be stepped with respect to each other. Here, the second pressing surface 112 may protrude from the first pressing surface 111 by the height difference H1-H2 between the first area11 and the second area 12 of the electrode assembly 10.

Thus, when the pressing press 100 presses the electrode assembly 10, the electrode assembly 10 may uniformly press one surface on which the first area 11 and the second area 12 are formed in spite of the height difference between the first area 11 and the second area 12 of the outer surface of the electrode assembly 10.

The connection surface 113 may be a configuration connecting the first pressing surface 111 to the second pressing surface 112 and may have various configurations.

Specifically, the connection surface 113 may be disposed between the first pressing surface 111 and the second pressing surface 112 to connect the first pressing surface 111 and the second pressing surface 112, which have heights different from each other, to each other.

Here, the connection surface 113 may be connected to the first pressing surface 111 and the second pressing surface 112 in various manners.

For example, as illustrated in FIG. 5, the connection surface 113 may be connected to be inclined with respect to the first pressing surface 111 and the second pressing surface 112 so as to minimize damage caused by linear scratches and damage on the electrode surface.

In addition, the pressing press 100 may include a heating member (not shown) heated to a temperature higher than room temperature so as to thermally press the electrode assembly 10.

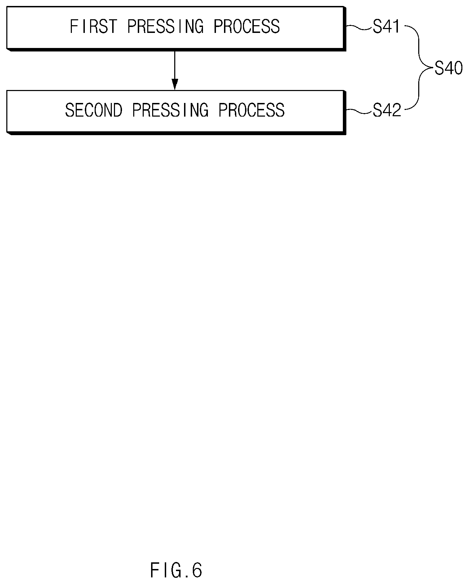

As illustrated in FIG. 6, the pressing process (S40) may include a first pressing process (S41) of pressing the electrode assembly using a first pressing press; and a second pressing process (S42) of pressing the electrode assembly by using a second pressing press.

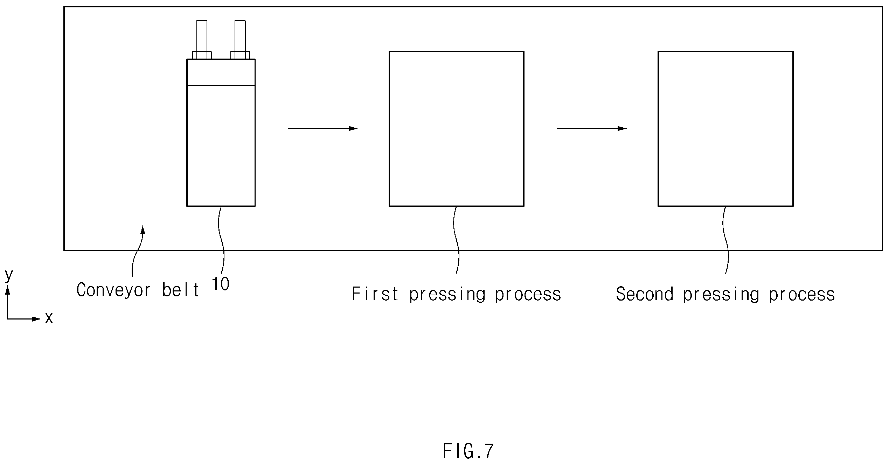

That is, in the pressing process (S40), as illustrated in FIG. 7, the first pressing press and the second pressing press may be sequentially disposed along the moving direction of the electrode assembly 10 on the conveyor belt to press the above-described electrode assembly at least twice. Here, the first pressing press and the second pressing press may press the electrode assembly 10 by moving in a z direction (direction penetrating the drawing) perpendicular to the x-y plane on the drawing.

Here, as described above, at least one of the first pressing press and the second pressing press may include the pressing press 100 having the stepped pressing surface 110 for pressing the electrode assembly 10. Here, contents of the pressing press 100 may be cited from the above contents.

For example, in the first pressing press, the pressing surfaces 110 for pressing the electrode assembly 10 may be formed to be stepped so as to have different heights; and the pressing surface of the second pressing press may be formed to be flat at a predetermined height.

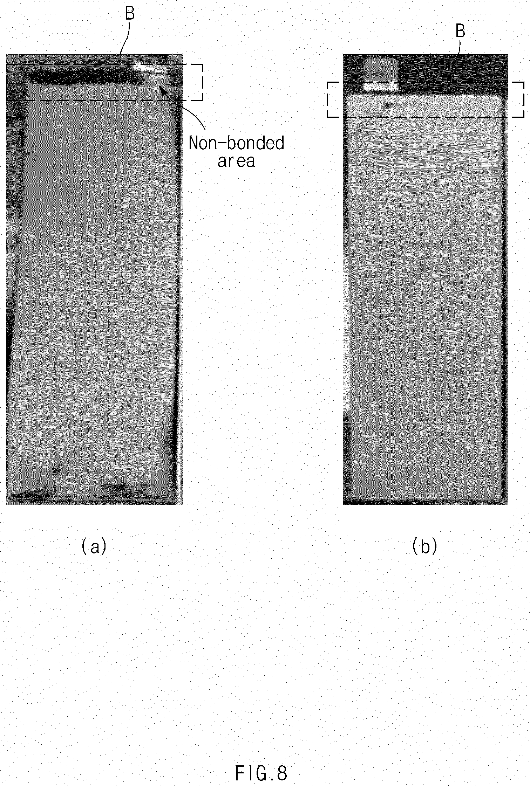

Hereinafter, a size of the non-bonded area of the electrode and the separator of the unit cell according to whether the present invention is applied will be described with reference to FIG. 8 (a) and (b). FIG. 8 (a) illustrates a front image (hereinafter, reference to as 'Comparative Example') of a unit cell (bi-cell) manufactured according to the related art, and FIG. 8 (b) illustrates a front image (hereinafter, referred to as an 'embodiment of the present invention') of a unit cell (bi-cell) manufactured according to the present invention.

First, referring to the front image of the unit cell, which is formed by Comparative Example in FIG. 8 (a), it is seen that a non-bonded area of an electrode and a separator, which has a black color, is formed on an edge portion B corresponding to an upper portion of a unit cell, i.e., an electrode tab. In addition, in the case of an electrode assembly including the unit cell as described above, it is expected that a non-bonded area between the unit cell and a separator sheet occurs, and thus, lithium is precipitated on a negative electrode to increase in resistance of the electrode. Thus, a problem in which performance of the secondary battery is deteriorated may occur.

On the other hand, referring to the front image of the unit cell formed according to the embodiment of the present invention in (b) of FIG. 8, it is seen that almost no non-bonded area is formed on an upper portion of the unit cell, i.e., an edge portion B corresponding to an electrode tab. Therefore, it is expected that the unit cell formed according to an embodiment of the present invention will hardly form not only the non-bonded area of the electrode and the separator inside the unit cell, but also the non-bonded area between the unit cell and the separator sheet on the electrode assembly, and thus, there may be an advantage in that the performance of the secondary battery is improved by minimizing the lithium precipitation on the negative electrode due to interfacial resistance.

While the embodiments of the present invention have been described with reference to the specific embodiments, it will be apparent to those skilled in the art that various changes and modifications may be made without departing from the scope of the invention as defined in the following claims.

### [Description of the Symbols]

10: Electrode assembly
11: First area
12: Second area
13: Correction sheet
14: Electrode tab
100: Pressing press
110: Pressing surface
111: First pressing surface
112: Second pressing surface
113: Connection surface
S10: Unit cell manufacturing process
S20: Electrode assembly manufacturing process
S30: Correction process
S40: Pressing process
S41: First pressing process
S42: Second pressing process

## Claims

1. A method for manufacturing a secondary battery, the method comprising:
a unit cell manufacturing process (S10) of manufacturing a unit cell comprising an electrode and a separator;
an electrode assembly (10) manufacturing process (S20) of folding a plurality of unit cells and a separator sheet to be alternately stacked so as to manufacture an electrode assembly;
a correction process (S30) of correcting a height difference formed on an outer surface of the electrode assembly; and
a pressing process (S40) of pressing the electrode assembly,
wherein, in the correction process (S30), a correction sheet (13) is disposed on an area formed with a relatively low height with respect to the inside of the electrode assembly (10) to correct the height difference formed on the outer surface of the electrode assembly (10),
wherein the electrode assembly (10) comprises:
a first area (11) having a first height (H1); and
a second area (12) having a second height (H2) less than the first height,
wherein, in the correction process (S30), the correction sheet (13) is disposed on the second area (12) to correct a height difference between the first area (11) and the second area (12).

2. The method of claim 1, wherein, in the correction process (S30), the height difference is corrected so that the outer surface of the electrode assembly has a uniform height.

3. The method of claim 1, wherein, in the correction process (S30), the correction sheet (13) is disposed at an upper side of the separator sheet on the second area (12) by as much as a difference between the first height (H1) and the second height (H2).

4. The method of claim 3, wherein the second area is disposed to correspond to an edge of the electrode assembly.

5. The method of claim 1, wherein the electrode assembly (10) comprises an electrode tab (14) connected to the electrode, and
the second area (12) is disposed to correspond to an area on which the electrode tab (14) of the electrode assembly is disposed.

6. The method of claim **1,** wherein the correction sheet (13) comprises a cast polypropylene tape (CPP) including a synthetic resin or an adhesive material.

7. The method of claim **1,** wherein electrode slurry is applied on the electrode, and
the height difference is formed by a thickness difference of the applied electrode slurry.

8. The method of claim 1, wherein the unit cell and the separator sheet are formed to have surfaces with surface areas corresponding to each other, and
wherein the correction sheet (13) is disposed above the separator sheet.

9. An electrode assembly in which a plurality of unit cells, each of which comprises an electrode and a separator, and separator sheets (13) are alternately stacked, the electrode assembly comprising:
a first area (11) having a first height (H1);
a second area (12) having a second height (H2) less than the first height (H1); and
a correction sheet (13) disposed on the second area to correct a height difference between the first area and the second area, wherein the correction sheet (13) is disposed at an upper side of the separator sheet on the second area (12) by as much as the height difference between the first area (11) and the second area (12).

10. The electrode assembly of claim 9, wherein the second area is disposed to correspond to an edge of the electrode assembly.

11. The electrode assembly of claim 9, wherein the electrode assembly comprises an electrode tab (14) connected to the electrode, and
the second area (12) is disposed to correspond to an area on which the electrode tab (14) of the electrode assembly is disposed.

12. The electrode assembly of claim 9, wherein electrode slurry is applied to the electrode, and
the second height is less than the first height by a thickness difference of the applied electrode slurry.

13. The electrode assembly of claim 9, wherein the unit cell and the separator sheet are formed to have surfaces with surface areas corresponding to each other, and
wherein the correction sheet (13) is provided above the separator sheet.

14. A secondary battery comprising an electrode assembly according to any one of claims 9 to 13.

## Patentansprüche

1. Verfahren zur Herstellung einer Sekundärbatterie, wobei das Verfahren umfasst:
einen Einheitszellen-Herstellungsprozess (S10) zum Herstellen einer Einheitszelle, die eine Elektrode und einen Separator umfasst;
einen Herstellungsprozess (S20) der Elektrodenanordnung (10) zum Falten einer Vielzahl von Einheitszellen und einer Separatorfolie, die abwechselnd gestapelt werden können, um eine Elektrodenanordnung herzustellen;
einen Korrekturprozess (S30) zum Korrigieren eines Höhenunterschieds, der auf einer Außenfläche der Elektrodenanordnung gebildet ist; und
einen Pressprozess (S40) zum Pressen der Elektrodenanordnung,
wobei in dem Korrekturprozess (S30) eine Korrekturfolie (13) auf einem Bereich angeordnet wird, der mit einer relativ geringen Höhe in Bezug auf das Innere der Elektrodenanordnung (10) ausgebildet ist, um den auf der Außenfläche der Elektrodenanordnung (10) gebildeten Höhenunterschied zu korrigieren,
wobei die Elektrodenanordnung (10) umfasst:
einen ersten Bereich (11) mit einer ersten Höhe (H1); und
einen zweiten Bereich (12) mit einer zweiten Höhe (H2), die geringer ist als die erste Höhe,
wobei in dem Korrekturprozess (S30) die Korrekturfolie (13) auf dem zweiten Bereich (12) angeordnet wird, um einen Höhenunterschied zwischen dem ersten Bereich (11) und dem zweiten Bereich (12) zu korrigieren.

2. Verfahren nach Anspruch 1, wobei in dem Korrekturprozess (S30) der Höhenunterschied so korrigiert wird, dass die Außenfläche der Elektrodenanordnung eine gleichmäßige Höhe aufweist.

3. Verfahren nach Anspruch 1, wobei in dem Korrekturprozess (S30) die Korrekturfolie (13) an einer Oberseite der Separatorfolie auf dem zweiten Bereich (12) um so viel wie einen Unterschied zwischen der ersten Höhe (H1) und der zweiten Höhe (H2) angeordnet ist.

4. Verfahren nach Anspruch 3, wobei der zweite Bereich so angeordnet ist, dass er einer Kante der Elektrodenanordnung entspricht.

5. Verfahren nach Anspruch 1, wobei die Elektrodenanordnung (10) eine mit der Elektrode verbundene Elektrodenfahne (14) umfasst, und
der zweite Bereich (12) so angeordnet ist, dass er einem Bereich entspricht, auf dem die Elektrodenfahne (14) der Elektrodenanordnung angeordnet ist.

6. Verfahren nach Anspruch 1, wobei die Korrekturfolie (13) ein gegossenes Polypropylenband (CPP) umfasst, das ein Kunstharz oder ein Haftmaterial enthält.

7. Verfahren nach Anspruch 1, wobei Elektrodenaufschlämmung auf die Elektrode aufgebracht wird, und
der Höhenunterschied durch einen Dickenunterschied der aufgebrachten Elektrodenaufschlämmung gebildet wird.

8. Verfahren nach Anspruch 1, wobei die Einheitszelle und die Separatorfolie so ausgebildet sind, dass sie Oberflächen mit einander entsprechenden Oberflächenbereichen aufweisen, und
wobei die Korrekturfolie (13) über der Separatorfolie angeordnet ist.

9. Elektrodenanordnung, in der eine Vielzahl von Einheitszellen, von denen jede eine Elektrode und einen Separator umfasst, und Separatorfolien (13) abwechselnd gestapelt sind, wobei die Elektrodenanordnung umfasst:
einen ersten Bereich (11) mit einer ersten Höhe (H1);
einen zweiten Bereich (12) mit einer zweiten Höhe (H2), die geringer ist als die erste Höhe (H1); und
eine Korrekturfolie (13), die auf dem zweiten Bereich angeordnet ist, um einen Höhenunterschied zwischen dem ersten Bereich und dem zweiten Bereich zu korrigieren, wobei die Korrekturfolie (13) an einer Oberseite der Separatorfolie auf dem zweiten Bereich (12) um so viel wie den Höhenunterschied zwischen dem ersten Bereich (11) und dem zweiten Bereich (12) angeordnet ist.

10. Elektrodenanordnung nach Anspruch 9, wobei der zweite Bereich so angeordnet ist, dass er einer Kante der Elektrodenanordnung entspricht.

11. Elektrodenanordnung nach Anspruch 9, wobei die Elektrodenanordnung eine mit der Elektrode verbundene Elektrodenfahne (14) umfasst, und
der zweite Bereich (12) so angeordnet ist, dass er einem Bereich entspricht, auf dem die Elektrodenfahne (14) der Elektrodenanordnung angeordnet ist.

12. Elektrodenanordnung nach Anspruch 9, wobei Elektrodenaufschlämmung auf die Elektrode aufgebracht ist, und
die zweite Höhe um einen Dickenunterschied der aufgebrachten Elektrodenaufschlämmung geringer ist als die erste Höhe.

13. Elektrodenanordnung nach Anspruch 9, wobei die Einheitszelle und die Separatorfolie so ausgebildet sind, dass sie Oberflächen mit einander entsprechenden Oberflächenbereichen aufweisen, und
wobei die Korrekturfolie (13) über der Separatorfolie vorgesehen ist.

14. Sekundärbatterie, umfassend eine Elektrodenanordnung nach einem der Ansprüche 9 bis 13.

## Revendications

1. Procédé de fabrication d'une batterie secondaire, le procédé comprenant :
un processus de fabrication (S10) d'une cellule unitaire consistant à fabriquer une cellule unitaire comprenant une électrode et un séparateur ;
un processus de fabrication (S20) d'un ensemble d'électrodes (10) consistant à plier une pluralité de cellules unitaires et une feuille de séparation pour qu'elles soient empilées en alternance de manière à fabriquer un ensemble d'électrodes ;
un processus de correction (S30) consistant à corriger une différence de hauteur formée sur une surface extérieure de l'ensemble d'électrodes ; et
un processus de pressage (S40) consistant à presser l'ensemble d'électrodes,
dans lequel, dans le processus de correction (S30), une feuille de correction (13) est disposée sur une zone formée avec une hauteur relativement faible par rapport à l'intérieur de l'ensemble d'électrodes (10) pour corriger la différence de hauteur formée sur la surface extérieure de l'ensemble d'électrodes (10),
dans lequel l'ensemble d'électrodes (10) comprend :
une première zone (11) ayant une première hauteur (H1) ; et
une seconde zone (12) ayant une seconde hauteur (H2) inférieure à la première hauteur,
dans lequel, dans le processus de correction (S30), la feuille de correction (13) est disposée sur la seconde zone (12) pour corriger une différence de hauteur entre la première zone (11) et la seconde zone (12).

2. Procédé selon la revendication 1, dans lequel, dans le processus de correction (S30), la différence de hauteur est corrigée de sorte que la surface extérieure de l'ensemble d'électrodes ait une hauteur uniforme.

3. Procédé selon la revendication 1, dans lequel, dans le processus de correction (S30), la feuille de correction (13) est disposée sur un côté supérieur de la feuille de séparation sur la seconde zone (12) sur une hauteur correspondant à une différence entre la première hauteur (H1) et la seconde hauteur (H2).

4. Procédé selon la revendication 3, dans lequel la seconde zone est disposée pour correspondre à un bord de l'ensemble d'électrodes.

5. Procédé selon la revendication 1, dans lequel l'ensemble d'électrodes (10) comprend une languette d'électrode (14) connectée à l'électrode, et
la seconde zone (12) est disposée pour correspondre à une zone sur laquelle la languette d'électrode (14) de l'ensemble d'électrodes est disposée.

6. Procédé selon la revendication 1, dans lequel la feuille de correction (13) comprend un ruban de polypropylène coulé (CPP) incluant une résine synthétique ou un matériau adhésif.

7. Procédé selon la revendication 1, dans lequel une suspension d'électrode est appliquée sur l'électrode, et
la différence de hauteur est formée par une différence d'épaisseur de la suspension d'électrode appliquée.

8. Procédé selon la revendication 1, dans lequel la cellule unitaire et la feuille de séparation sont formées pour avoir des surfaces avec des superficies se correspondant, et
dans lequel la feuille de correction (13) est disposée au-dessus de la feuille de séparation.

9. Ensemble d'électrodes dans lequel une pluralité de cellules unitaires, dont chacune comprend une électrode et un séparateur, et des feuilles de séparation (13) sont empilées en alternance, l'ensemble d'électrodes comprenant :
une première zone (11) ayant une première hauteur (H1) ;
une seconde zone (12) ayant une seconde hauteur (H2) inférieure à la première hauteur (H1) ; et
une feuille de correction (13) disposée sur la seconde zone pour corriger une différence de hauteur entre la première zone et la seconde zone, dans lequel la feuille de correction (13) est disposée sur un côté supérieur de la feuille de séparation sur la seconde zone (12) sur une hauteur correspondant à la différence de hauteur entre la première zone (11) et la seconde zone (12).

10. Ensemble d'électrodes selon la revendication 9, dans lequel la seconde zone est disposée pour correspondre à un bord de l'ensemble d'électrodes.

11. Ensemble d'électrodes selon la revendication 9, dans lequel l'ensemble d'électrodes comprend une languette d'électrode (14) connectée à l'électrode, et
la seconde zone (12) est disposée pour correspondre à une zone sur laquelle la languette d'électrode (14) de l'ensemble d'électrodes est disposée.

12. Ensemble d'électrodes selon la revendication 9, dans lequel une suspension d'électrode est appliquée sur l'électrode, et
la seconde hauteur est inférieure à la première hauteur d'une différence d'épaisseur de la suspension d'électrode appliquée.

13. Ensemble d'électrodes selon la revendication 9, dans lequel la cellule unitaire et la feuille de séparation sont formées pour avoir des surfaces avec des superficies se correspondant, et
dans lequel la feuille de correction (13) est prévue au-dessus de la feuille de séparation.

14. Batterie secondaire comprenant un ensemble d'électrodes selon l'une quelconque des revendications 9 à 13.
